# EUROPEAN PATENT APPLICATION

(11) **EP 1 471 752 A2**
(43) Date of publication of application: **27.10.2004**
(21) Application number: 04007979.0
(22) Date of filing: 01.04.2004
(51) Int. Cl.: H04Q 7/32

(54) **Electronic key system and electronic key usage method**

(30) Priority: 23.04.2003 JP 2003118126
(71) Applicant: Hitachi, Ltd., Chiyoda-ku, Tokyo 101-8010 (JP)
(72) Inventor: Teramura, Takeshi, Hitachi, Ltd., Int. Prop. Gr., Chiyoda-ku, Tokyo 100-8220 (JP); Saito, Motonobu, Hitachi, Ltd., Int. Prop. Gr., Chiyoda-ku, Tokyo 100-8220 (JP); Kuwana, Toshiyuki, Hitachi, Ltd., Int. Prop. Gr., Chiyoda-ku, Tokyo 100-8220 (JP)
(74) Representative: Strehl Schübel-Hopf & Partner

(57) **Abstract**

In a case where the services are used jointly among plural users with the use of shared electronic keys, a method which invalidates only the electronic keys of some users is provided.

Electronic key data stored in a user module 100 owned by the user includes two kinds of data: main ID data and sub ID history data. A service providing device 400 holds two tables: a service allowance table and a service denial table, and upon receipt of the electronic key data from the user module 100, it allows the use of the services (Step 106) only when the main ID data of the electronic key is present in the service allowance table (Step 104) and when the sub ID data contained in the sub ID history data is absent in the service denial table (Step 105).

## Description

### Field of the Invention

The present invention relates to an electronic key system and an electronic key usage method which judge whether provision of various kinds of services are to be allowed or denied by storing an electronic key in a device, such as an IC card, and more particularly to an electronic key method and an electronic key system in which an electronic key is shared among plural users.

### Background of the Invention

A service providing method using an electronic key stored in an IC card has been disclosed as means which judges allowance or denial of the provision of services of various kinds (see Japanese Patent Laid-open Publication No. 2002-279360). To be more specific, the room key of a hotel or the key of a rental car booked in advance is stored in an IC card in the form of an electronic key, and an apparatus, which is installed at a site where the services are to be provided and judges allowance or denial of the provision of services, reads out the electronic key from the IC card, so that the door is unlocked when the read information of the electronic key is judged as being valid.

Also, there has been disclosed an apparatus which reads out an electronic key from an IC card, and judges allowance or denial of the provision of services by judging the validity of the information of the electronic key (see Japanese Patent Laid-open Publication No. 2002-279360 and Japanese Patent Laid-open Publication No. H7-233663).

The prior arts described above fail to disclose a method which permits plural users to use the services jointly by sharing an electronic key. Aconceivable, simple electronic key sharing method is a method in which an electronic key is shared by copying the same electronic key in all the IC cards owned by the respective users. This method, however, raises a problem as follows. That is, for example, in case of loss or theft of any of the IC cards in which the same electronic key is copied, it is necessary to invalidate the electronic key in the service providing apparatus in order to prevent the unauthorized use of the lost IC card. However, when anyone of the same, plural electronic keys is invalidated, the rest of the electronic keys become invalid as well.

### Summary of the Invention

The invention was devised in view of the foregoing, and therefore has an object to eliminate the need to invalidate the rest of the electronic keys even when some of the electronic keys shared among users are invalidated.

In order to achieve the above and other objects, in the invention, electronic key data, formed from main ID data used as a first identifier and sub ID data used as a second identifier, is stored in a user module, such as an IC card owned by a user, and two tables, a service allowance table and a service denial table, are held in a service providing device which judges allowance or denial of the use of services, so that the service providing device judges the validity of the electronic key data.

For example, an electronic key system which provides services with the use of an electronic key includes a user module which has stored electronic key data having a main ID and a sub ID to identify an electronic key, and a service providing device which judges allowance or denial of the provision of services.

The invention provides the electronic key system, wherein the user module includes accepting means which accepts an electronic key transmission request from the service providing device, and transmitting means which transmits the electronic key data to the service providing device; and the service providing device includes storing means which stores service allowance information to allow the provision of services and service denial information to deny the provision of services, accepting means which accepts electronic key data from the user module, first judging means which judges whether the main ID in the accepted electronic key data is present in the service allowance information, second judging means which judges whether the sub ID in the accepted electronic key data is present in the service denial information, and provision judging means which judges allowance or denial of the provision of services according to results of the first and second judgments.

### Brief Description of the Drawings

Fig. 1 is a view showing the system configuration according to a first embodiment of the invention;
Fig. 2 is a view showing the hardware configuration according to the first embodiment of the invention;
Fig. 3 is a view showing the functional configuration according to the first embodiment of the invention;
Fig. 4A is a view showing the data configuration of user module according to the first embodiment of the invention;
Fig. 4B is a view showing the data configuration of electronic key managing apparatus according to the first embodiment of the invention;
Fig. 4C is a view showing the data configuration of service providing device according to the first embodiment of the invention;
Fig. 5 is a flowchart of electronic key usage processing according to the first embodiment of the invention;
Fig. 6 is another flowchart of electronic key usage processing according to the first embodiment of the invention;
Fig. 7 is a flowchart of electronic key sharing processing according to the first embodiment of the invention;
Fig. 8 shows an example of a data value when an electronic key is shared, according to the first embodiment of the invention;
Fig. 9 shows another example of a data value when an electronic key is shared, according to the first embodiment of the invention;
Fig. 10 is a flowchart of electronic key invalidation processing according to the first embodiment of the invention;
Fig. 11A shows examples of screen display during the sharing processing according to the first embodiment of the invention;
Fig. 11B shows examples of screen display during the invalidation processing according to the first embodiment of the invention;
Fig. 12A is a view showing the data configuration of usermodule according to a second embodiment of the invention;
Fig. 12B is a view showing the data configuration of electronic key managing apparatus according to the second embodiment of the invention;
Fig. 12C is a view showing the data configuration of service providing device according to the second embodiment of the invention;
Fig. 13 is a flowchart of electronic key purchase processing according to the second embodiment of the invention;
Fig. 14A shows examples of screen display during the purchase processing according to the second embodiment of the invention.
Fig. 14B shows examples of the display during the sharing processing according to the second embodiment of the invention; and
Fig. 14C shows examples of the display screen during the invalidation processing according to the second embodiment of the invention.

### Description of the Preferred Embodiment

A first embodiment of the present invention will now be described. This embodiment is an example when an electronic key is adapted for use as the door key of a residence.

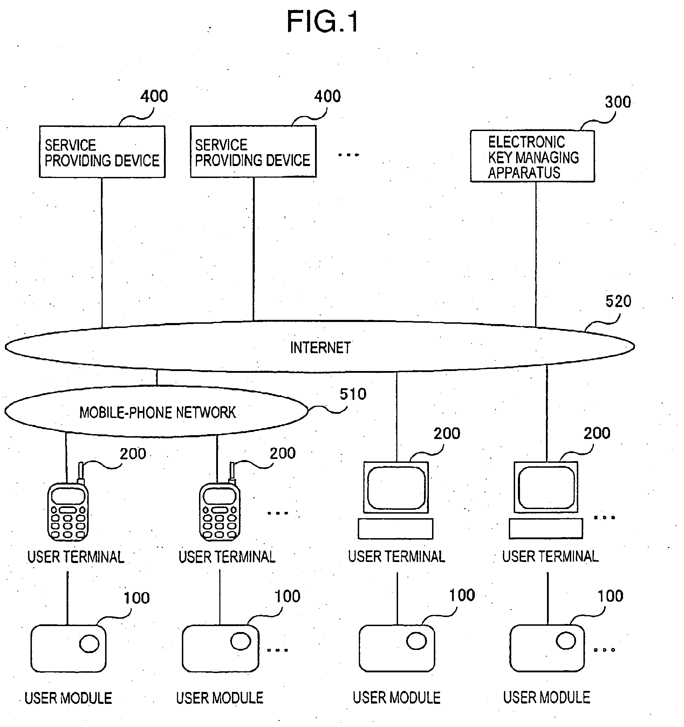

Fig. 1 is a view showing the system configuration of an electronic key system to which the present invention is applied.

As is shown in the drawing, the systemof this embodiment includes user modules 100, user terminals 200, an electronic key managing apparatus 300, and service providing devices 400, all of which are interconnected via a network 520, such as the Internet.

Each user module 100 is a device which stores electronic key data, and transmits and generates the electronic key data depending on predetermined processing described below. In order to prevent forgery, unauthorized copying of an electronic key, it is preferable to use a tamper-resistant device, such as an IC card,- as the user module 100.

Each user terminal 200 is a terminal owed by each user who wishes to use the services. The terminal 200 of a mobile type is connected to the network 520 via a network 510, such as a mobile-phone network.

The electronic key managing apparatus 300 manages an electronic key in various manners, including the issuance and invalidation of an electronic key in response to a request from the user. The electronic key managing apparatus 300 is, for example, a WEB site. Each service providing device 400 is a device which judges the validity of an electronic key stored in the user module 100, and judges allowance or denial of the provision of services according to the result of judgment. In this embodiment, the service providing device 400 is a device which is installed at the door of the user's residence and connected to an electromagnetic lock or the like, so that it judges the validity of the electronic key and locks or unlocks the door upon judging that the electronic key is valid.

The hardware configuration of the electronic key system will now be described.

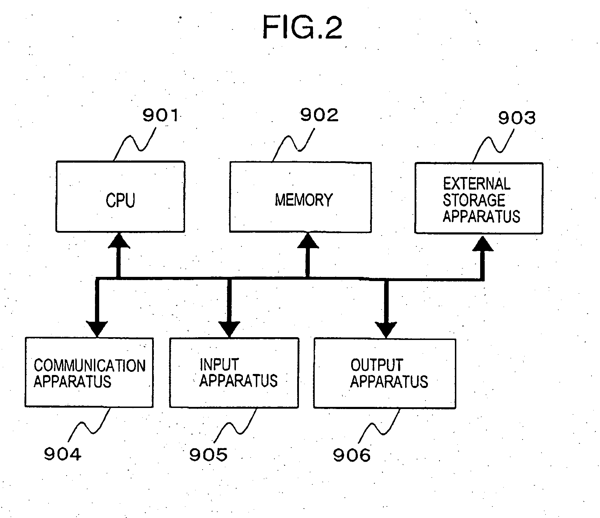

Fig. 2 shows the hardware configuration of the respective components: the user module 100, the user terminal 200, the electronic key managing apparatus 300, and the service providing device 400.

The user terminal 200 can be, for example, a typical computer system including a CPU 901 which processes and computes data according to programs, a memory 902 into/from which the CPU 901 can directly write/read out data, an external storage apparatus 903, such as a hard disc, a communication apparatus 904 which enables data communications with an external system, an input apparatus 905, such as a keyboard, key buttons, and a voice input device, and an output apparatus 906, such as a display or a printer. To be more specific, the user terminal 200 can be a mobile phone, a PHS (Personal Handy-Phone System), a PDA (Personal Digital Assistant), a PC (Personal Computer), etc.

As with the user terminal 200, the electronic key managing apparatus 300 can be a typical computer system. To be more specific, the electronic key managing apparatus 300 can be a server, a host computer, etc.

The user module 100 is a computer apparatus including, of the configuration shown in Fig. 2, at least the CPU 901 which processes and computes data according to programs, the memory 902 into/from which the CPU 901 can directly write/read out data, and the communication apparatus 904 which enables communications with an external system. The user module 100 can be, for example, an IC card.

The service providing device 400 is a computer apparatus including, of the configuration shown in Fig. 2, at least the CPU 901 which processes and computes data according to programs, the memory 902 into/from which the CPU 901 can directly write/read out data, and the communication apparatus 904 which enables data communications with an external system.

The functional configuration of the electronic key system will now be described.

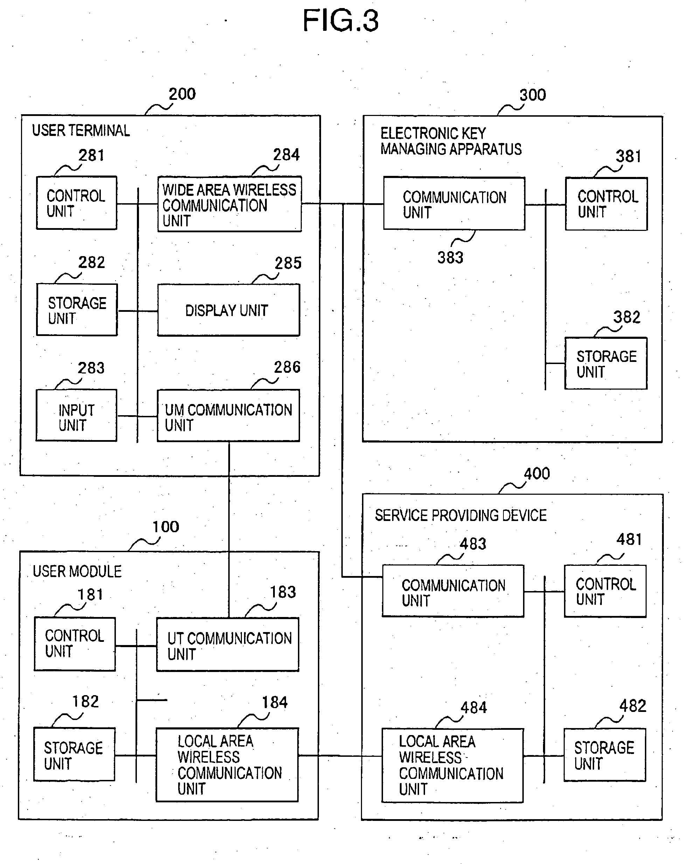

Fig. 3 is a view showing the functional configuration of each component shown in Fig. 1. Functions of the respective components described below are achieved by independently running predetermined programs stored or loaded into their respective memories 902, that is to say, by running a program for the user module 100 in the CPU 901 of the user module 100, a program for the user terminal 200 in the CPU 901 of the user terminal 200, a program for the electronic key managing apparatus 300 in the CPU 901 of the electronic key managing apparatus 300, and a program for the service providing device 400 in the CPU 901 of the service providing device 400.

The user module 100 includes a control unit 181, a storage unit 182, a user terminal communication unit (hereinafter, referred to as the UT communication unit) 183, and a local area wireless communication unit 184. The control unit 181 controls the respective units in the user module 100. The storage unit 182 stores programs and data in the memory 902. The UT communication unit 183 transmits/receives data to/from the user terminal 200 by means of the communication apparatus 904. The local area wireless communication unit 184 transmits/receives data to/from the service providing device 400 or another user module 100 through wireless communications by means of the communication apparatus 904. Examples of such wireless communications include a wireless-LAN, ISO/IEC14443, etc. Alternatively, the user terminal 200 may include the local area wireless communication unit 184, so that the user module 100 communicates with the service providing device 400 or the like via the user terminal 200.

The user terminal 200 includes a control unit 281, a storage unit 282, an input unit 283, a wide area wireless communication unit 284, a display unit 285, and a user module communication unit (hereinafter, referred to as the UM communication unit) 286. The control unit 281 controls the respective units in the user terminal 200. The storage unit 282 stores programs and data in the external storage apparatus 903. The input unit 283 accepts a data input from the user through the input apparatus 905. The wide area wireless communication unit 284 transmits/receives data to/from the electronic key managing apparatus 300 or another user terminal 200 by means of the communication apparatus 904. The display unit 285 displays data to the user by means of the output apparatus 906. The UM communication unit 286 transmits/receives data to/from the user module 100.

The electronic key managing apparatus 300 includes a control unit 381, a storage unit 382, and a communication unit 383. The control unit 381 controls the respective units in the electronic key managing apparatus 300. The storage unit 382 stores programs and data in the external storage apparatus 903. The communication unit 383 transmits/receives data to/from the user terminal 100 or the service providing device 400 via the network 520 by means of the communication apparatus 904.

The service providing device 400 includes a control unit 481, a storage unit 482, a communication unit 483, and a local area wireless communication unit 484. The control unit 481 controls the respective units in the service providing device 400. The storage unit 482 stores programs and data in the memory 902. The communication unit 483 transmits/receives data to/from the electronic key managing apparatus 300 by means of the communication apparatus 904. The local area wireless communication unit 484 transmits/receives data to/from the user module 100.

The data configuration of various kinds of data used in the electronic key system will now be described.

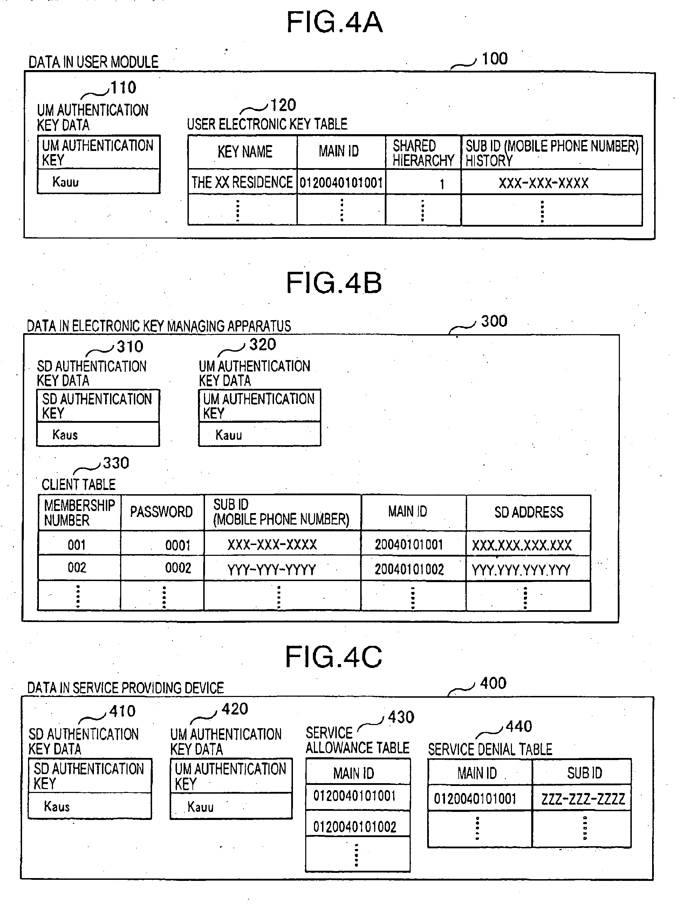

Fig. 4A, Fig. 4B and Fig. 4C are views showing the data configurations of various kinds of data used in the electronic key system. As is shown in the drawing, various kinds of data described below are stored in the user module 100, the electronic key managing apparatus 300, and the service providing device 400.

Fig. 4A is a view showing the data configurations of the user module 100.

In the user module 100 are stored user module authentication key data (hereinafter, referred to as the UM authentication key data) 110 used as an encryption key, and a user electronic key table 120. The UM authentication key data 110 is encryption key data used in mutual authentication processing described below. The encryption key data can be, for example, a common key used in a common-key encryption scheme. Examples of the common-key encryption scheme include DES (Data Encryption Standard), AES (Advanced Encryption Standard), etc.

The user electronic key table 120 is a set of data in which information of the electronic key owned by the user is stored. The user electronic key table 120 includes a key name indicating the name of an electronic key, a main ID used as a first identifier to identify the electronic key, a shared hierarchy indicating a range within which the electronic key can be shared, and the history of a sub ID used as a second identifier to identify the electronic key.

In the key name is set a name (for example, "the XX residence") for the user to identify the service providing device 400 for which the electronic key is issued. In the main ID is set a unique ID different from the main ID's of the other already-issued electronic keys to be discriminated from these other electronic keys. For example, the electronic key managing apparatus 300 may manage serial numbers while counting up the value thereof each time an electronic key is issued, so that this sequentially counted-up value is set in the main ID.

In the shared hierarchy is set a numerical value of "0" or "1" or greater. In the case of "0", it means that the electronic key cannot be shared. Also, in a case where, for example, "2" is set in the shared hierarchy, the user A permits the user B to share the electronic key as a first shared hierarchy, and further, the user B permits the user C to share the electronic key as a second shared hierarchy. Also, in a case where "1" is set in the shared hierarchy, the user A permits the user B to share the electronic key as the first shared hierarchy, but the user B inhibits the user C to share the electronic key as the second shared hierarchy. The value indicating the impossibility to share the electronic key is not limited to "0", and it can be any predetermined, specific value.

The sub ID is the second identifier to identify the electronic key, and the sub ID history can store plural kinds of sub ID data. When the electronic key managing apparatus 300 issues or provides a new user module to the user, the data set in the sub ID in a client table 330 described below is set in the sub ID history. In this embodiment, the mcbile phone number of the user is used as the sub ID.

Fig. 4B is a view showing the data configurations of the electronic key managing apparatus 300.

In the electronic key managing apparatus 300 are stored service device authentication key data (hereinafter, referred to as the SD authentication key data) 310, UM authentication key data 320, and the client table 330. As with the UM authentication key data 110, the SD authentication key data 310 and the UM authentication key data 320 are encryption key data used in the mutual authentication processing. In a case where the common-key encryption scheme is used, data having the same value as the UM authentication key data 110 of the user module 100 is set in the UM authentication key data 320 of the electronic key managing apparatus 300.

The client table 330 is a set of data which manages various kinds of information related to the users. The client table 330 includes a membership number to uniquely identify the user, a password comprising an alpha-numerical sequence to authenticate the user, a sub ID to identify the user among those sharing the electronic key when the electronic key is shared, a main ID to identify the electronic key assigned to the user, and an SD address. In the main ID is set the same value as the main ID set in the user module 100 of the user who applied for the use of services. In the sub ID is set the same value as the sub ID data initially set in the sub ID of the user electronic key table 120 described above. In the services of this embodiment, the mobile phone number is used as the sub ID. The SD address is a network address of the service providing device 400 over the network 520, and is used to enable the electronic key managing apparatus 300 to transmit/receive data to/from the service providing device 400. To be more specific, an IP address or the like is used.

Fig. 4C is a view showing the data configurations of the service providing device 400.

In the service providing device 400 are stored SD authentication key data 410, UM authentication key data 420, a service allowance table 430, and a service denial table 440. As with the UM authentication key data 110 or the like, the SD authentication key data 410 and the UM authentication key data 420 are encryption key data used in the mutual authentication processing. In a case where the common-key encryption scheme is used, data having the same value as the SD authentication key data 310 of the electronic key managing apparatus 300 is set in the SD authentication key data 410 of the service providing device 400. Also, data having the same value as the UM authentication key data 320 of the electronic key managing apparatus 300 and the UM authentication key data 110 of the user module 100 is set in the UM authentication key data 420 of the service providing device 400.

The service allowance table 430 is a table which is used in the service providing device 400 to identify an electronic key for which the use of services is allowed, and includes data of the main ID for which the use of services is allowed. The service denial table 440 is a table which is used in the service providing device 400 to identify an electronic key for which the use of services is inhibited, and includes data of the main ID and the sub ID for which the use of services is inhibited. The same value as the main ID set in the user module which uses the service providing device 400 is set in the main ID in the service allowance table 430 and in the service denial table 440.

In this embodiment, assume that various kinds of data shown in Fig. 4A, Fig. 43 and Fig. 4C, except for the data in the service denial table 440, are pre-set in the memory 902 or the external storage apparatus 903 in each component. For example, at the timing at which the user applies for the use of services to the service provider, the electronic key managing apparatus 300 sets predetermined data in the memory 902 or the external storage apparatus 903 in each component, and distributes and locates the user module 100, the service providing device 400, etc.

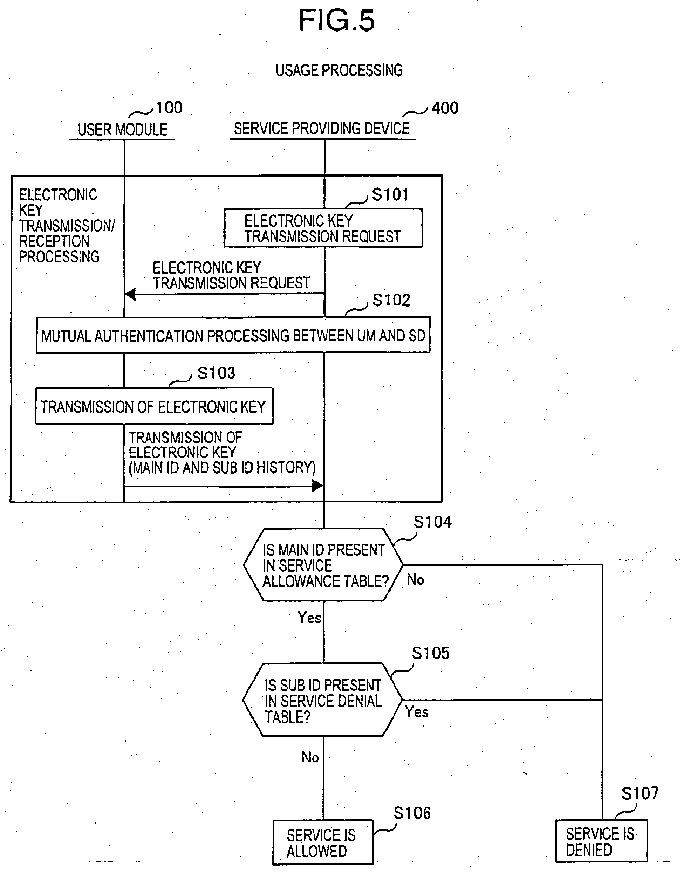

With reference to Fig. 5, the flow of the processing when the user is to receive the provision of services (the door of the residence is unlocked) in this embodiment will now be described.

The local area wireless communication unit 484 of the service providing device 400 periodically transmits an electronic key transmission request message to the user module 100 (Step 101). Upon receipt of the message at the local area wireless communication unit 184 of the user module 100, the control unit 181 performs the mutual authentication processing with the control unit 481 of the service providing device 400 (Step 102). The mutual authentication processing is performed according to "5.2.2 Three pass authentication" described in ISO/IEC 9798-2 defined as the mutual authentication procedure with the use of a common key, by using, for example, the UM authentication key data 110 and 420 in the user module 100 and the service providing device 400, respectively. By performing the mutual authentication processing in this manner, it is possible to prevent a malicious third party from receiving the provision of services through the use of a false user module 100. It is also possible to prevent the user module 100 fromtransmitting the electronic key erroneously to a false service providing device 400 and thereby revealing the content of the electronic key.

Also, after the mutual authentication is completed, it is preferable to encrypt the contents of the following transmission messages with the use of a session key or the like. There is known a method which uses a random number generated during the "Three pass authentication" processing described above as the session key. By encrypting the messages in this manner, it is possible to prevent the electronic key from being revealed through eavesdropping of the messages.

Subsequently, the local area wireless communication unit 184 of the user module 100 transmits an electronic key transmission message to the service providing device 400 (Step 103). It should be noted that this message contains, of all kinds of data held in the user electronic key table 120, at least the main ID data and the sub ID history data.

The local area wireless communication unit 484 of the service providing device 400 receives the message, and the control unit 481 then judges whether the received main ID data is present in the service allowance table 430 (Step 104). When the main ID data is present (YES in Step 104), the control unit 481 judges whether the sub ID data contained in the received sub ID history data is present in the service denial table 440 (Step 105). When any of the sub ID data contained in the received sub ID history data is present in the service denial table 440, the control unit 481 judges "the presence" in this judgment. Hence, the provision of services is denied against the user module in the user key table, having the sub ID data present in the service denial table 440 in the sub ID history. Hence, a user module for which the sharing is permitted from the sub ID (a user module of the sharing user in the lower order than the sub ID) can no longer be used, which makes it possible to prevent the lost or stolen user module from being abused, for example, by copying the electronic key therefrom.

Upon judging the absence of the sub ID (NO in Step 105) , the control unit 481 performs the processing to allow the provision of services (Step 106). In this embodiment, the unlocking processing of the door of the residence is performed.

Upon judging the presence of the sub ID (YES in Step 105), the control unit 481 denies the provision of services and ends the processing (Step 107). In this embodiment, the unlocking processing of the door of the residence is not performed and the door therefore remains locked. In the absence of the main ID in the service allowance table (NO in Step 104) , the control unit 481 also denies the provision of services and ends the processing (Step 107).

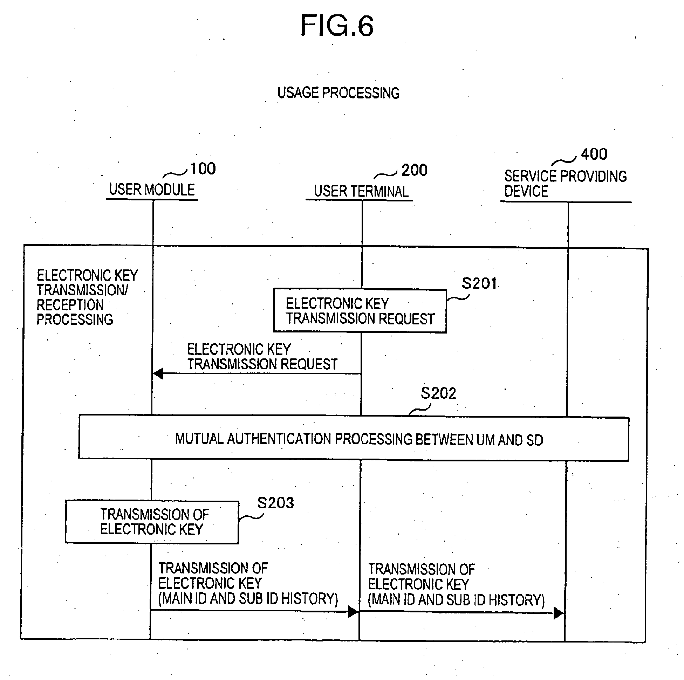

The foregoing processing described the method by which the user module 100 transmits the electronic key by means of the local area wireless communication unit 184; however, the electronic key may be transmitted by another method. For example, the electronic key may be transmitted by way of the network 510 and the network 520. The flow of the processing in this case will be described below. In comparison with the processing of Fig. 5, this processing is different only in the unit of the electronic key transmission/reception processing (Step 101 through Step 103), and the rest units are the same as those of Fig. 5. Hence, the different unit will be described with reference to Fig. 6.

Fig. 6 shows the flow of the electronic key transmission/reception processing when the user is to receive the provision of services with the use of the user terminal 200.

Upon acceptance of an operation command from the user at the input unit 283 of the user terminal 200, the UM communication unit 286 transmits an electronic key transmission request message to the user module 100 (Step 201) . Upon receipt of the message at the UT communication unit 183 of the user module 100, the control unit 181 performs the mutual authentication processing with the control unit 481 of the service providing device 400 (Step 202). The mutual authentication processing is performed via the user terminal 200, the network 510, and the network 520. The authentication key data used in the mutual authentication processing, the mutualauthentication procedure, encryption of the following messages, etc. are the same as those in the processing in Step 102 of Fig. 5.

Then, the UT communication unit 183 of the user module 100 transmits an electronic key transmission message to the service providing device 400 (Step 203). This message transmission is the same as the transmission in Step 202 in that the message is transmitted via the user terminal 200 and the network 510. After the processing in Step 203, the service providing device 400 performs the processing in Step 104 and thereafter described in Fig. 5.

By transmitting the electronic keyvia the various kinds of networks in this manner, it is possible to address a case, for example, where an acquaintance of the user who owns the user module 100 used as the electronic key visits the user' s home while the user is out, by unlocking the door of the residence by means of the user terminal 200 through remote control and asking the acquaintance to wait inside.

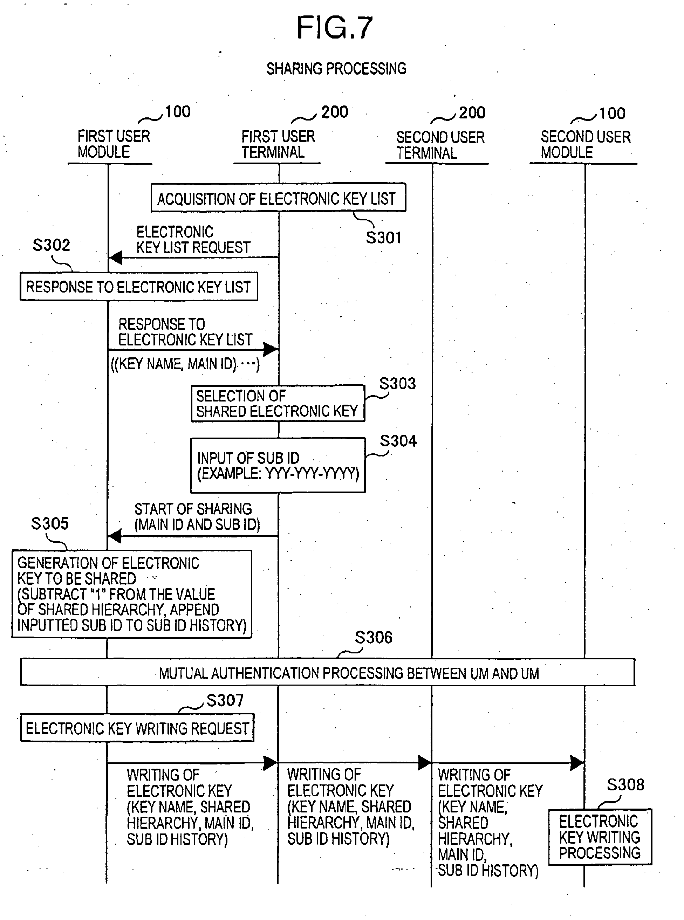

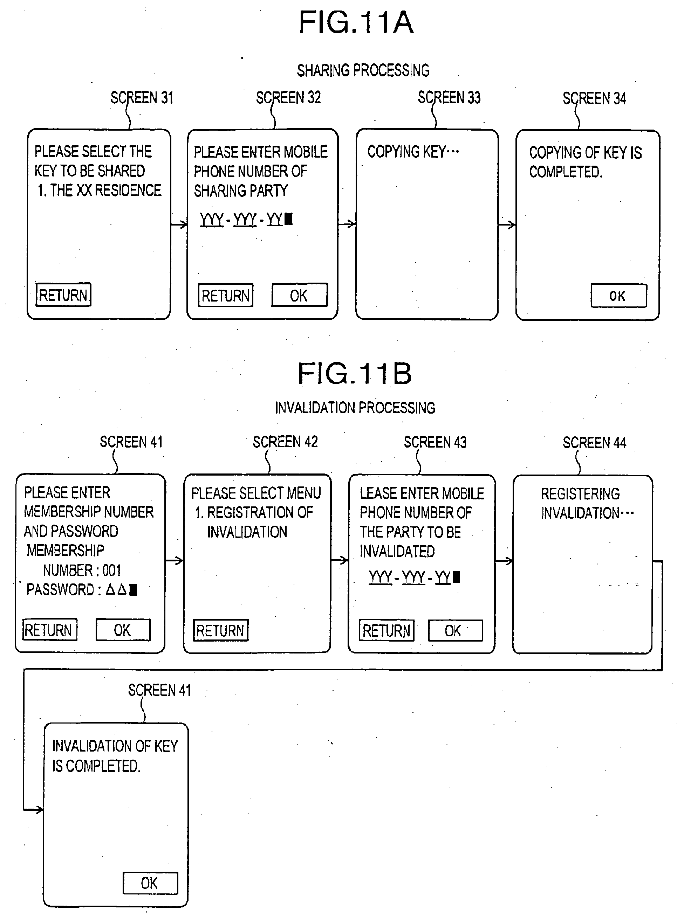

The processing in a case where the electronic key is shared among the service users will now be described. Fig. 7 shows the flow of the electronic key sharing processing. Fig. 11A shows examples of the display screen displayed on the user terminal 200 during the sharing processing. In this processing, assume that the user module 100 and the user terminal 200 owned by the user having the original electronic key (hereinafter, referred to also as the original user) are a first user module 100 and a first user terminal 200, respectively. Also, assume that the user module 100 and the user terminal 200 owned by the user who is allowed to share the electronic key (hereinafter, referred to also as the sharing user) are a second user module 100 and a second user terminal 200, respectively. In the examples of the display screen of Fig. 11A, the mobile phone number is used as the sub ID.

Initially, upon acceptance of an operation command from the original user at the input unit 283 of the first user terminal 200, the UM communication unit 286 transmits an electronic key list request message to the first user module 100 (Step 301). The UT communication unit 183 of the first user module 100 receives the message, and the control unit 181 then sets, in an electronic key list response message, as many pairs of the key name data and the main ID data in respective records as the stored records in the user electronic key table 120. The UT communication unit 183 then transmits the electronic key list response message to the first user terminal 200 (Step 302).

Upon receipt of the message at the UM communication unit 286 of the first user terminal 200, the display unit 285 displays the received list of the key name data on the output apparatus 906 (screen 31). The input apparatus 905 of the first user terminal 200 then accepts a selection command of the key name that the user selected from the list of the selection data (Step 303).

Subsequently, the display unit 285 of the first user terminal 200 displays a sub ID data input screen on the output apparatus 906 (Screen 32). The input apparatus 905 then accepts the sub ID data the user inputted. The sub ID data is the data necessary in case of loss or theft of the user module 100 to invalidate the electronic key of this user module 100 alone, and unique data in the group of users sharing the electronic key is used as the sub ID data. In this embodiment, the mobile phone number of the user is used as the sub ID. The UM communication unit 286 then transmits a sharing start message to the first user module 100 (Step 304). This message contains the main ID data selected in Step 303 and the sub ID data inputted in Step 304. After the transmission of the message, the display unit 285 of the first user terminal 200 displays a "COPYING" screen on the output apparatus 906 (Screen 33).

Upon receipt of the message at the UT communication unit 183 of the first user module 100, the control unit 181 generates the data of the user electronic key table 120 to be transmitted to the second user module 100 owned by the sharing user (Step 305). The user electronic key table 120 is a set of data described with reference to Fig. 4. The main ID data contained in the sharing start message is set in the main ID, and the key name of the record specified by this main ID data is set in the key name. In the shared hierarchy is set the value obtained by subtracting "1" from the value of the shared hierarchy of this record. It should be noted, however, that when the value after subtraction takes a minus numerical value, the control unit 181 judges that no further sharing of the electronic key is allowed, and ends the processing without performing the processing thereafter. In the sub ID history data is additionally set the sub ID data contained in the sharing start message.

Subsequently, the first user module 100 and the second user module 100 perform the mutual authentication processing (Step 306). The UM authentication key data 110 held in the respective user modules is used as the authentication keys used in this mutual authentication processing. Also, the mutual authentication processing is performed via the respective user terminals 200 and the network 510. Alternatively, the mutual authentication processing may be performed directly between the first user module 100 and the second user module 100 via their respective local area wireless communication units 184. The rest of the mutual authentication processing is the same as the processing in Step 102 of Fig. 5, and so is the encryption of the messages thereafter.

Subsequently, the first user module 100 transmits an electronic key writing message to the second user module 100 (Step 307) . In this instance, themessage is transmitted through the same transmission path as in Step 306. This message contains the data of the user electronic key table 120 generated in Step 305. Upon receipt of the electronic key writing message, the second user module 200 appends the data (record) of the user electronic key table 120 in the message to the existing user electronic key table 120 (Step 308). After this processing is completed, the display unit 285 of the first user terminal 200 displays a "COPYING IS COMPLETED" screen on the output apparatus 906 (screen 34). With these steps, the electronic key sharing processing is completed.

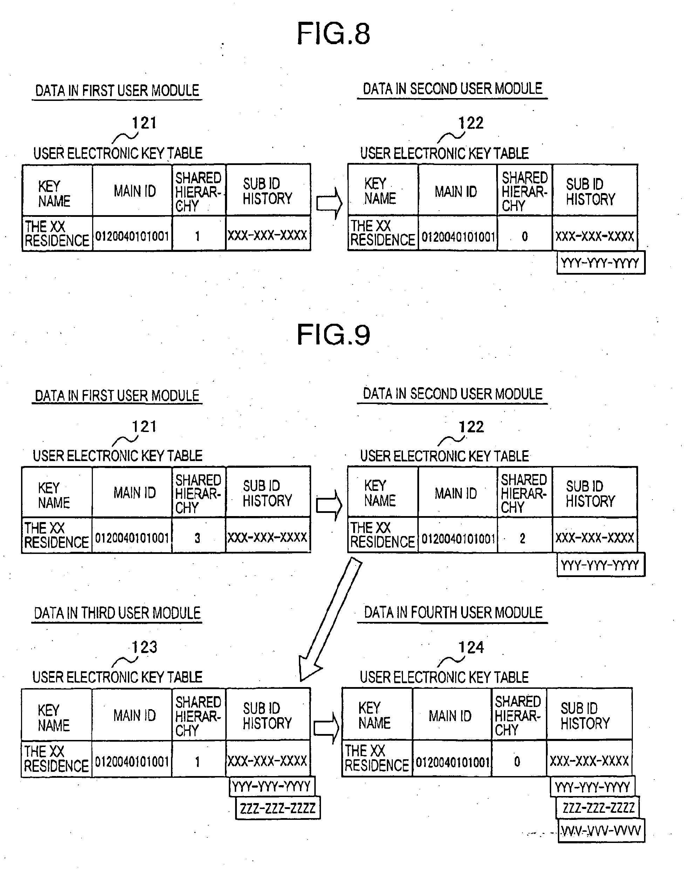

The user electronic key table 120 in the electronic key sharing processing will now be described. Fig. 8 shows a user electronic key table 121 of the first user module 100 (hereinafter, referred to as the first user electronic key table) and a user electronic key table 122 of the second user module 100 (hereinafter, referred to as the second user electronic key table) when "1" is given to the value of the shared hierarchy set in the first user electronic key table 121.

The data in the first user electronic key table 121 remains the same before and after the electronic key sharing processing. In the second user electronic key table 122 are set the key name, the main ID having the same value as that in the first user electronic key table 121, and a value "0", which is obtained by subtracting "1" from the value of the shared hierarchy in the first user electronic key table 121. Also, the record, in which the mobile phone number inputted through the first user terminal 200 is set, is newly appended to the sub ID history. In this case, because "0" is set in the shared hierarchy in the second user electronic key table, the second user is not able to perform the electronic key sharing processing.

Fig. 9 shows the first user electronic key table 121, the second user electronic key table 122, a third user electronic key table 123 (the user electronic key table of a third user module 100), and a fourth user electronic key table 124 (the user electronic key table of a fourth user module 100) when "3" is given to the shared hierarchy in the first user electronic key table 121 of the original user.

In the shared hierarchy of the second user electronic key table 122 is set a value "2" obtained by subtracting "1" from the value of the first user electronic key table 121, and the same records as those of Fig. 8 are newly appended for the rest. Then, in the shared hierarchy of the third user electronic key table 123 is set a value "1" obtained by subtracting "1" from the value of the second user electronic key table 122, and a record, in which the mobile phone number set in the second user electronic key table 122 and a mobile phone number inputted through the second user terminal 200, is newly appended to the sub ID history. Likewise, in the shared hierarchy of the fourth user electronic key table 124 is set a value "0", and a record, in which three mobile phone numbers are set, is newly appended to the sub ID history. In this case, because "0" is set in the shared hierarchy of the fourth user electronic key table, the fourth user is not able to perform the electronic key sharing processing.

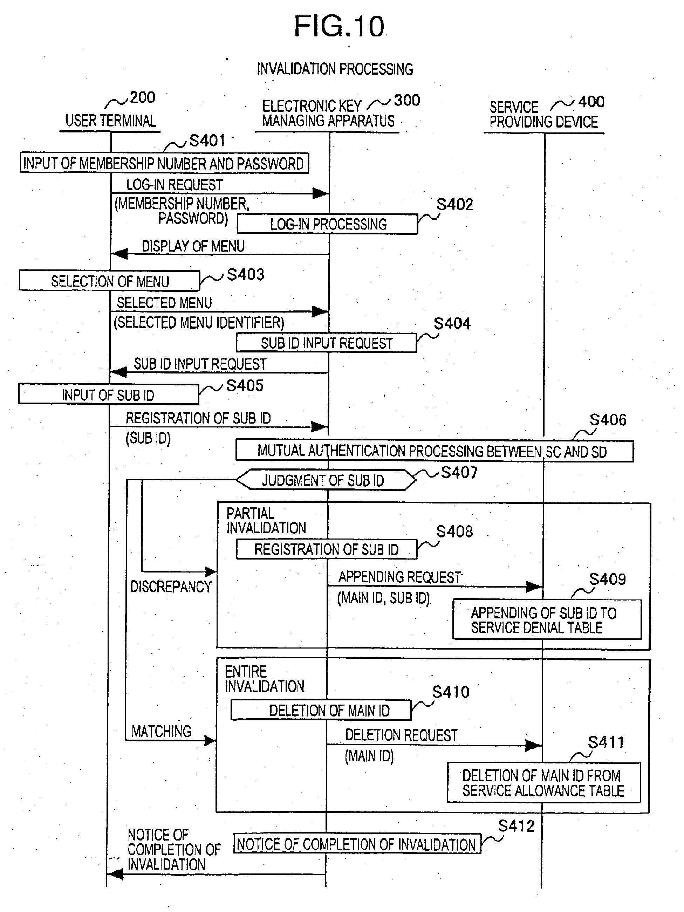

The flow of processing when the electronic key is invalidated will now be described with reference to Fig. 10 and Fig. 11B. Fig. 10 shows the flow of the electronic key invalidation processing. Fig. 11B shows examples of the display screen displayed on the user terminal 200 during the invalidation-processing. Loss or theft of the user module 100 is conceivable as a case where the electronic key is invalidated. Because Step 401 through Step 405 are the processing achievable by any existing WEB browser and WEB server, the detailed description thereof is omitted. Also, a mobile phone number is used as the sub ID in examples of the display screen of Fig. 11B.

Initially, the display unit 285 of the user terminal 200 displays, in response to an operation command from the user, a screen which accepts an input of the membership number and the password (screen 41), and accepts the input of the membership number and the password from the user. The wide area wireless communication unit 284 then transmits a log-in request message to the electronic key managing apparatus 300 (Step 401) . The log-in request message contains the data of the membership number and the password inputted from the user. Upon receipt of the message at the communication unit 383 of the electronic key managing apparatus 300, the control unit 381 searches through the client table 330, and judges whether the inputted membership number is present and verifies the inputted password. When the membership number is present and the password is verified, the communication unit 383 transmits a service menu display message to the user terminal 200 (Step 402). When the membership number is absent or the password is unverified, the control unit 381 ends the processing without performing the processing thereafter. The menu display message contains a command identifier or a page description language to enable a menu screen to be displayed on the output apparatus 906 of the user terminal 200. Such a page description language includes, for example, HTML (Hyper Text Markup Language).

Upon receipt of the menu display message at the wide area wireless communication unit 284 of the user terminal 200, the display unit 285 displays a menu selection screen (screen 42) on the output apparatus 906. The input unit 283 then accepts the menu selection of the user inputted through the input apparatus 905, and the wide area wireless communication unit 284 transmits the result to the electronic key managing apparatus 300 as a selected menu message (Step 403). Upon receipt of the message at the communication unit 383 of the electronic key managing apparatus 300, the control unit 381 transmits a sub ID input request message to the user terminal 200 in a case where it judges that the message selects the menu for registration of invalidation (invalidation processing) (Step 404). In this embodiment, assume that there is no service menu other than the invalidation processing.

Upon receipt of the sub ID input request message at the wide area wireless communication unit 284 of the user terminal 200, the display unit 285 displays a sub ID input acceptance screen (screen 43) on the output apparatus 906. The input unit 283 then accepts the sub ID data inputted through the input · apparatus 905, and the wide area wireless communication unit 284 transmits a sub ID registration message to the electronic key managing apparatus 300 (Step 405). This message contains the inputted sub ID data. After the message is transmitted, a "REGISTERING INVALIDATION" screen (screen 44) is displayed on the output apparatus 906 of the user terminal 200.

After the communication unit 383 of the electronic key managing apparatus 300 receives the sub ID registration message, the control unit 381 performs the mutual authentication processing with the service providing device 400 (Step 406). The authentication keys used in this instance are the SD authentication key data 310 and 410 of the electronic key managing apparatus 300 and the service providing device 400, respectively. Also, the network address of the service providing device 400, with which communications are to be made, is the SD address data in the client table 330, which is specified from the logged-in membership number data. The rest is the same as the mutual authentication processing in Step 102 of Fig. 5.

Subsequently, the control unit 381 of the electronic key managing apparatus 300 searches through the client table 330, using the membership number data received in the log-in processing (Step 402) as the key, and obtains the sub ID (mobile phone number) data corresponding to the membership number. The control unit 381 then judges whether the sub ID data contained in the sub ID registration message received from the user terminal 200 matches with the phone number (Step 407). In a case where the received sub ID data matches with the sub ID data in the client table, the user module of the original user needs to be invalidated due to loss or theft. Hence, entire invalidation processing is performed to invalidate all the electronic keys having the main ID of this user module. On the other hand, in a case where the received sub ID data does not match with the sub ID data in the client table, the user module to be invalidated is the one other than the user module of the original user (that is, a user module of the sharing user). Hence, partial invalidation processing is performed to invalidate only the user module having this sub ID. The partial invalidation processing invalidates a user module which is allowed to share the electronic key by this user module having this sub ID as well, which makes it possible to prevent the ill-intended use of the lost user module.

For the partial invalidation processing, the communication unit 383 of the electronic key managing apparatus 300 transmits an appending request message to the service providing device 400 (Step 408). This message contains the main ID data of the record of the membership number, and the sub ID data in the received sub ID registration message. Upon receipt of the appending request message at the communication unit 483 of the service providing device 400, the control unit 481 appends one record, comprising the main ID data and the sub ID data, to the service denial table 440 (Step 409). In a case where the partial invalidation processing (Step 409) is performed, the entire invalidation processing (Step 410) described below is not performed, and instead, the completion of invalidation is notified (Step 412).

For the entire invalidation processing, the communication unit 383 of the electronic key managing apparatus 300 transmits a deletion request message to the service providing device 400 (Step 410). This message contains the main ID data of the record of the membership number. Upon receipt of the deletion request message at the communication unit 483 of the service providing device 400, the control unit 481 deletes the corresponding main ID data from the service allowance table 430 (Step 411).

After the partial invalidation processing or the entire invalidation processing is completed, the communication unit 383 of the electronic key managing apparatus 300 transmits a message notifying the completion of invalidation to the user terminal 200 (Step 412). Upon receipt of the message at the wide area wireless communication unit 284 of the user terminal 200, the display unit 285 displays an "INVALIDATION IS COMPLETED" screen (screen 45) on the output apparatus 906.

With these steps, the processing to invalidate the electronic key is completed.

In this embodiment, the sub ID data stored in the service providing device 400 or the sub ID data contained in the message transmitted to the service providing device 400 may be encrypted or digested with a unidirectional function. when configured in this manner, it is possible to prevent the sub ID data from being revealed as the service providing device 400 is eavesdropped and the interior thereof is analyzed (for example, when the phone number is used as the sub ID data, the phone number is revealed). Examples of the unidirectional function include SHA-1 (Secure HashAlgorithm 1), MD-5 (Message Digest 5), etc. Examples of encryption means include the common-key encryption scheme, such as DES (Data Encryption Standard) and AES (Advanced Encryption Standard), and a public-key encryption scheme, such as elliptic curve cryptography.

In this embodiment, the user inputs the sub ID data through the user terminal 200; however, the sub ID data may be pre-stored in the user terminal 200 or the user module 100 of the original user. In this case, the input of the sub ID through the user terminal 200 in the shared key generation processing (Step 305) in the electronic key sharing processing (see Fig. 7) is unnecessary, and the pre-stored sub ID data is used in generation of the electronic key data to be shared. Alternatively, the sub ID data may be pre-stored in the user terminal 200 or the user module 100 of the sharing user. In this case, new sub ID data is not generated in the sub ID history data in the shared key generation processing (Step 305) during the electronic key sharing processing (see Fig. 7), and the pre-stored sub ID data is appended to the sub ID history of the user electronic key table 120 in the electronic key writing processing (Step 308).

A second embodiment of the present invention will now be described.

This embodiment is an example in a case where an electronic key is adapted for use for the door of a rental car. Since this embodiment is similar to the first embodiment above inmany respects, the following description will chiefly describe the difference.

The system configuration of this embodiment is almost the same as the system configuration in the first embodiment above (see Fig. 1). In this embodiment, however, the service providing device 400 is a device installed at the door of a rental car to unlock the door in response to the validity judgment of the electronic key data. Alternatively, it may be a device installed in the vicinity of a rental car to release the fixing apparatus of the rental car in response to the validity judgment.

The hardware configuration and the functional configuration are almost the same as those in the first embodiment above (see Fig. 2 and Fig. 3).

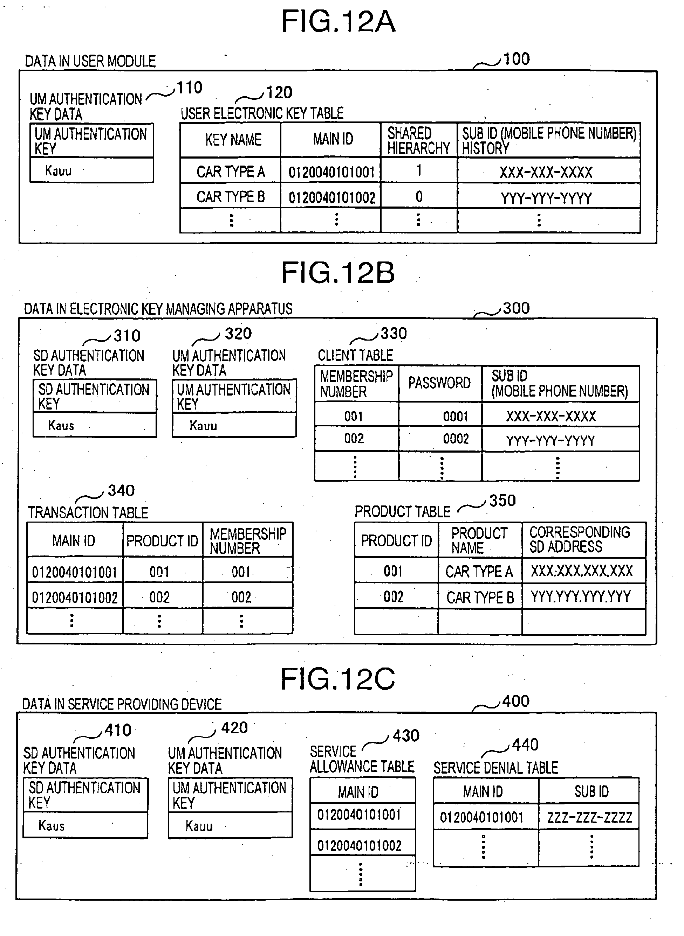

The data configuration of various kinds of data used in the electronic key system of this embodiment is shown in Fig. 12A, Fig. 12BandFig. 12C. Forthe data configuration of various kinds of data, the description of the similar respects with the first embodiment above is omitted and the difference will be described below.

The client table 330 of the electronic key managing apparatus 300 differs from the client table 330 in the first embodiment above in that it does not include the main ID data and the SD address data as data items. In the first embodiment above, the user and the service providing device used by the user (the device installed at the door of the user's residence to judge the validity of the electronic key) are fixed in advance, and the main ID is therefore set in a one-to-one correspondence with the membership number (see the client table 330 of Fig. 4B). On the contrary, in this embodiment, the relation between the user and a rental car the user is going to use is not fixed in advance. Hence, it is necessary to correlate the user with the rental car at the timing at which the user chooses the rental car and purchases the key of the rental car. The electronic key managing apparatus 300 of this embodiment therefore includes a transaction table 340 and a product table 350 as new rabies, neither of which is present in the first embodiment above (see Fig. 12B).

The transaction table 340 is a table which is used to manage the purchase transaction of an electronic key, and includes a main ID to identify an individual electronic key, a product ID to identify the product corresponding to the electronic key of the main ID, and a membership number to identify the purchaser of the electronic key of the main ID. To the transaction table 340 is appended a record generated at the timing at which the user purchases the key of the rental car.

The product table 350 is a table which is used to manage the products to be provided from the service provider, and has a product ID to uniquely identify the product (the rental car in this embodiment), a product name indicating the name of the product, and an SD address as a network address of the service providing device 400 corresponding to the product.

In this embodiment, assume that the tables and data shown in Fig. 12A, Fig. 12B and Fig. 12C, except for four tables specified below, are pre-set in the memory 902 or the external storage apparatus 903 in each component. The four tables are the user electronic key table 120, the transaction table 340, the service allowance table 430, and the service denial table 440.

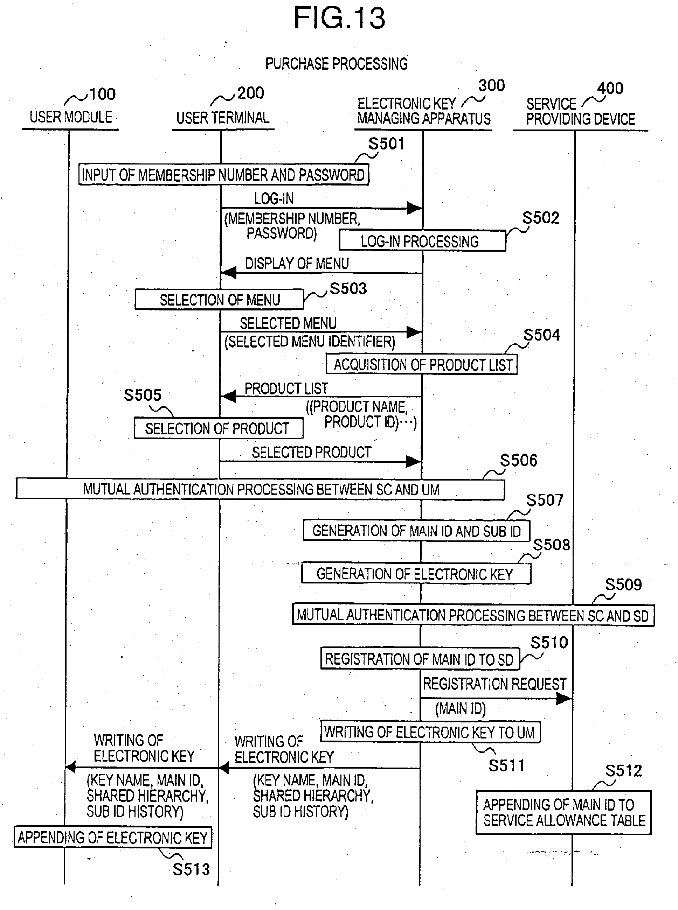

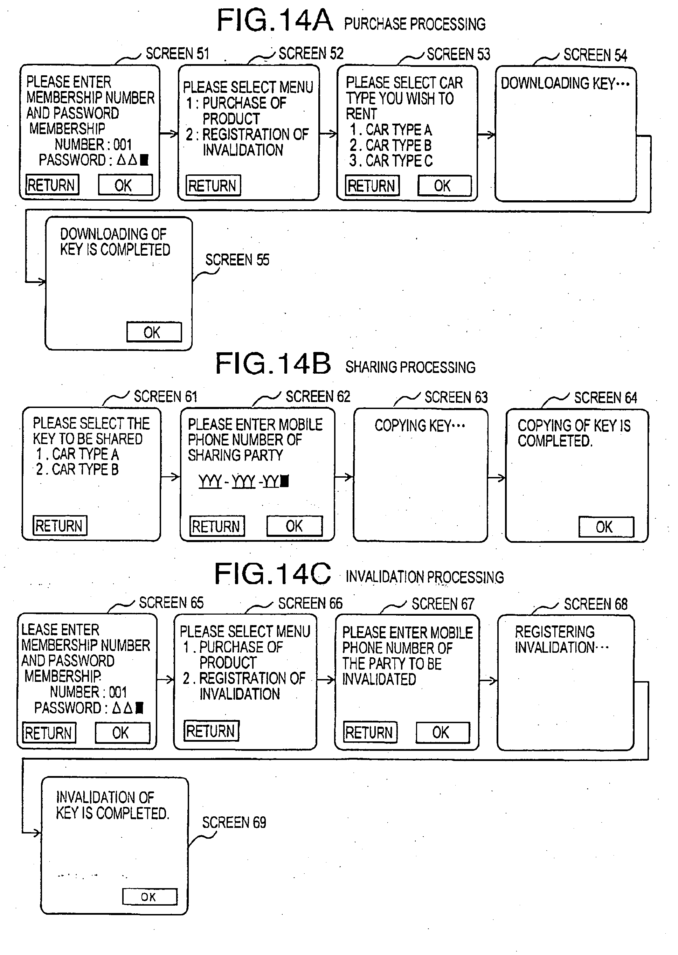

The flow of the processing when the user purchases the electronic key will now be described with reference to Fig. 13 and Fig. 14A, Fig. 14B and Fig. 14C. Fig. 13 is a flowchart of the processing. Fig. 14A shows examples of the display screen on the user terminal 200 during the purchase processing. Fig. 14B shows examples of the display screen on the user terminal 200 during the sharing processing .Fig. 11C shows examples of the display screen on the user terminal 200 during the invalidation processing. And a mobile phone number is used as the sub ID in these examples of the display screen. Transmission and reception of messages, the mutual authentication processing, etc. are basically the same as those in the first embodiment above.

The user terminal 200 transmits the membership number and the password inputted through a "MEMBERSHIP NUMBER AND PASSWORD INPUT SCREEN" (screen 51 of Fig. 14A) to the electronic key managing apparatus 300 (Step 501). Upon receipt of the input of the membership number and the password, the electronic keymanaging apparatus 300 performs the log-in processing with reference to the client table 330, and transmits a menu screen (screen 52) to the user terminal 200 (Step 502). The foregoing processing is the same as the invalidation processing (see Fig. 10 and Fig. 11) of the first embodiment above. It should be noted, however, that the contents displayed as the menu differ between the screen 52 (Fig. 14A) and the screen 42 (Fig. 11A).

The flow of the processing in a case where a "PRODUCT PURCHASE" menu is selected on the menu screen (screen 52) will now be described. The electronic key invalidation processing performed in a case where "REGISTRATION OF INVALIDATION" is selected will be subsequently described below.

Upon acceptance of the selection of the "PRODUCT PURCHASE" menu at the input unit 283 of the user terminal 200, the wide area wireless communication unit 284 transmits the information of the selected menu to the electronic key managing apparatus 300 (Step 503). Upon acceptance of the message at the communication unit 383 of the electronic key managing apparatus 300, the control unit 381 searches through the product table 350, and obtains more than one pair of the product ID data and the product name data, which is transmitted to the user terminal 200 by the communication unit 383 (Step 504). Upon receipt of the data at the wide area wireless communication unit 284 of the user terminal 200, the display unit 285 displays a product list screen (screen 53) on the output apparatus 906 on the basis of the received data, and accepts an input as to the product selection by the user (Step 505) . The wide area wireless communication unit 284 then transmits the prcduct ID data of the product accepted at the input unit 283 of the user terminal 200 to the electronic key managing apparatus 300, after which a "DOTnINLOADING" screen (screen 54) is displayed on the output apparatus 906.

After the communication unit 383 of the electronic key managing apparatus 300 receives the product ID data, the control unit 381 performs the mutual authentication processing with the user module 100 (Step 506). The authentication keys used in this instance are the UM authentication key data 320 of the electronic key managing apparatus 300 and the UM authentication key data 110 of the user module 100.

The control unit 381 of the electronic key managing apparatus 300 then performs generation processing of the main ID data and the sub ID data (Step 507). A unique data value different from the main ID data of the already-issued electronic keys is used as the main ID data to be discriminated from these electronic keys. For example, the electronic key managing apparatus 300 may manage serial numbers while counting up the value thereof each time an electronic key is issued, so that the counted-up value is used as the data value. For the sub ID data, it is sufficient to set a data value that is unique in a group of the users sharing the issued electronic keys, and a mobile phone number of the user is used as the sub ID data in this embodiment.

The control unit 381 of the electronic key managing apparatus 300 then generates the electronic key data having key name data, main ID data, shared hierarchy data, and sub ID history data (Step 508). In the key name data is set the product name data in the product table 350, specified by using the product ID data received in Step 505 as the search key. In the main ID data and the sub ID history data are set the main ID data and the sub ID data generated in Step 507, respectively. As with the first embodiment above, in the shared hierarchy data is set specific numerical value data indicating a range within which the electronic key can be shared. In addition, the control unit 381 of the electronic key managing apparatus 300 newly appends the record having the main ID data, the product ID data, and the membership number data described above, to the transaction table 340.

The control unit 381 of the electronic key managing apparatus 300 then performs the mutual authentication processing with the service providing device 400 (Step 509). The authentication keys used in this instance are the SD authentication key data 310 of the electronic key managing apparatus 300 and the SD authentication key data 410 of the service providing device 400. The corresponding SD address data in the product table 350 is set as the network address of the service providing device 400 with which communications are to be made. The corresponding SD address data is specified by using the product ID data received in Step 505 as the search key.

The communication unit 383 of the electronic key managing apparatus 300 then transmits a registration request message, containing the main ID data generated in Step 507, to the service providing device 400 (Step 510).

Upon receipt of the registration request message at the communication processing 483 of the service providing device 400, the control unit 481 appends the main ID data thus received to the service allowance table 430 (Step 512).

The communication unit 383 of the electronic key managing apparatus 300 then transmits an electronic key writing message, containing the electronic key data generated in Step 508, to the user module 100 by way of the UM communication unit 286 of the user terminal 200 (Step 511). Upon receipt of the electronic key data at the UT communication unit 183 of the user module 100, the control unit 181 appends the electronic key data to the user electronic key table 120 (Step 513), after which a completion screen (screen 55) is displayed on the output apparatus 906 of the user terminal 200.

Withthesesteps, theprocessingwhentheuserpurchases the electronic key is completed. This processing allows the user to receive the provision of services (the purchase of the key of a rental car) through the use of an electronic key even when the user uses an arbitrary service providing device that is not fixed in advance.

The electronic key usage processing and the electronic key sharing processing are the same as those in the first embodiment above (see Fig. 5, Fig. 6 and Fig. 7). Fig. 14B shows the display screens on the user terminal 200 during the electronic key sharing processing.

The electronic key invalidation processing differs from the counterpart in the first embodiment above (see Fig. 10) in the following respects. That is, in this embodiment, the network address of the service providing device 400, with which communications are to be made during the mutual authentication processing (Step 406), is the SD address data in the product table 350 specified from the membership number data received in the log-in processing (Step 502). To be more specific, the product ID is specified from the transaction table 340 by using the membership number data as the search key, and the SD address data in the product table 350 is then specified by using the product ID thus specified as the search key.

Also, the main ID data contained in the messages transmitted in the partial invalidation processing (Step 408) and the entire invalidation processing (Step 410) is obtained by searching through the transaction table 340 by using the membership number data received in the log-in processing (Step 402) as the search key. Fig. 14C shows the display screens on the user terminal 200 during the electronic key invalidation processing.

The above description has described the second embodiment of the invention. The foregoing processing, as in the first embodiment above, makes it possible to achieve not only the entire invalidation processing which invalidates all the user modules having the same main ID, but also the partial invalidation processing which invalidates only the user module having the corresponding sub ID, even when the user uses an arbitrary service providing device which is not fixed in advance.

As has been described, according to the invention, even when the services are used jointly by sharing the electronic key among plural users, not all the electronic keys are necessarily invalidated when the electronic key of any one of the users is invalidated due to loss or theft. In other words, it is possible to prevent an unwanted event that when one user lost the electronic key (or the electronic key is stolen) and the electronic key is invalidated, the use of the services is invariably denied against all the users who shares the electronic key with this user.

It should be appreciated that the invention is not limited to the embodiments above, and the invention can be modified in various manners within the scope thereof. For example, the invention can be used as an electronic key of a rental conference room, an electronic key of a hotel room, an electronic key of an electronic locker, etc.

For example, in the usage processing in the first embodiment above, the service providing device 400 includes the service allowance table 430 and the service denial table 440 to judge allowance or denial of the provision of services. However, the electronic key managing apparatus 300 may hold the service allowance table 430 and the service denial table 440 for the respective service providing devices 400 to judge allowance or denial of the provision of services. To be more specific, it is conceivable that the electronic key managing apparatus 300 is set as the transmission destination of the electronic key transmission (Step 103) of Fig. 5, so that the electronic key managing apparatus 300 judges allowance or denial of the provision of services (Step 104 through Step 107) and transmits the judgment result to the service providing device 400.

Also, in the sharing processing in the first embodiment above, the user module 100 includes the user electronic key table 120 and generates the electronic key data to be shared. However, the electronic key managing apparatus 300 may hold the user electronic key tables 120 of the respective user modules and manages them collectively, so that it generates the electronic key data to be shared in response to a sharing request form the user terminal. To be more specific, it is conceivable that the electronic key managing apparatus 300 is set as the transmission destination of the acquisition of the electronic key list (Step 301) of the first user terminal 200 in Fig. 7, so that the electronic key managing apparatus 300 performs the processing of the first usermodule 100 thereafter (response to the electronic key list, generation of the electronic key to be shared, etc.).

As has been described, according to the invention, it is possible to use the services jointly by sharing the electronic key among plural users. Also, in a case where the electronic key being shared is invalidated, either all or only some of the shared electronic keys can be invalidated.

## Claims

1. An electronic key system which provides services with the use of an electronic key, said system comprising:
a user module which has stored electronic key data having a main ID and a sub ID to identify an electronic key, and a service providing device which judges allowance or denial of provision of services,
wherein:
said user module comprises
accepting means which accepts an electronic key transmission request from said service providing device, and
transmitting meanswhichtransmitssaidelectronickey data to said service providing device;
said service providing device comprises
storing means which stores service allowance information to allow the provision of services and service denial information to deny the provision of services,
accepting means which accepts said electronic key data from said user module,
first judging means which judges whether the main ID in said accepted electronic key data is present in said service allowance information,
second judging means which judges whether the sub ID in said accepted electronic key data is present in said service denial information, and
provision judging means which judges allowance or denial of the provision of services according to results of said first and second judgments.

2. The electronic key system according to Claim 1, wherein:
said provision judging means allows the provision of services when said first judging means judges that the main ID is present in said service allowance table and said second judging means judges that the sub ID is absent in said service denial table.

3. The electronic key system according to Claim 1, wherein:
said electronic key data comprises shared hierarchy data indicating whether the electronic key can be shared or not; and
said user module further comprises generating means which generates an electronic key to be shared, having a same main ID and a different sub ID, when the shared hierarchy data indicates that the electronic key can be shared.

4. The electronic key system according to Claim 1, further comprising:
an electronic key managing apparatus which manages an electronic key service,
wherein:
said electronic key managing apparatus comprises
a means which stores a client table containing a membership number and a sub ID to identify a user,
accepting means which accepts the membership number and the sub ID from an external system,
invalidation judging means which judges whether the sub ID in said client table corresponding to the accepted membership number matches with the accepted sub ID and judges, according to a result of said judgment, whether entire invalidation processing for invaliding all user modules having a same main ID or partial invalidation processing for invalidating only a user module having a same sub ID is to be performed, and
transmitting means which transmits a result of said invalidation judgment to said service providing device; and
said service providing device further comprises changing means which changes said service denial table or said service allowance table according to the result of said invalidation judgment.

5. A user module which has stored electronic key data used in judging allowance or denial of provision of services by a service providing device which provides services, wherein:
said electronic key data comprises main ID data and sub ID data to identify an electronic key; and
said user-module comprises transmission request acceptingmeans which accepts an electronic key transmission request from said service providing device, and transmitting means which transmits said electronic key data to said service providing device.

6. The user module according to Claim 5,
wherein said electronic key data s shared hierarchy data indicating whether the electronic key can be shared or not, and
wherein said user module further comprises:
sharing request accepting means which accepts an electronic key sharing request;
generating means which generates electronic key data to be shared, having a same main ID and a different sub ID, when the electronic key can be shared; and
transmitting means which transmits said generated electronic key data to be shared to an external system.

7. The user module according to Claim 6, further comprising:
sharing judging means which judges that the electronic key cannot be shared when the shared hierarchy data has a specific value and the electronic key can be shared when the shared hierarchy data has a value other than said specific value,
wherein said generating means generates said electronic key data to be shared by changing the value of the shared hierarchy data in said electronic key data by subtracting "1" therefrom.

8. A service providing device which judges allowance or denial of provision of services with the use of electronic key data stored in a user module, said device comprising:
storing means which stores service allowance information to allow the provision of services, and service denial information to deny the provision of services;
accepting means which accepts said electronic key data from said user module; and
judging means which judges allowance or denial of the provision of service for said accepted electronic key data on the basis of said accepted electronic key data, said service allowance information, and said service denial information.

9. The service providing device according to Claim 8, wherein:
said electronic key data comprises main ID data and sub ID data to identify an electronic key; and
said judging means comprises first judging means which judges whether a main ID in said accepted electronic key data is present in said service allowance information, and second judging means which judges whether a sub ID in said accepted electronic key data is present in said service denial information, and judges allowance or denial of the provision of services for said accepted electronic key data according to results of said first and second judgments.

10. A service providing device which judges allowance or denial of provision of services with the use of electronic key data stored in a user module,
wherein:
said electronic key data comprises main ID data and sub ID data to identify an electronic key;
said service providing device comprises storing means which stores service allowance information to allow the provision of services and service denial information to deny the provision of services;
invalidation accepting means which accepts a command forpartial invalidation or a command for entire invalidation of the electronic key from said user module;
appending means which appends, when the command for the partial invalidation is accepted, main ID data and sub ID data contained in said command to said service denial information; and
deleting means which deletes, when the command for the entire invalidation is accepted, main ID data contained in said command from said service allowance information.

11. An electronic key managing apparatus which manages electronic key data to receive provision of services, said apparatus comprising:
storing means which stores electronic key data having main ID data to identify an electronic key, sub ID data to identify the electronic key, and shared hierarchy data indicating a range within which the electronic key can be shared;
sharing requesting means which accepts a sharing request of the electronic key containing the sub ID data inputted from a linked-terminal apparatus via a network;
sharing judging means which judges whether the electronic key can be shared or not with reference to the shared hierarchy data; and
generating means which generates electronic key data to be shared when the electronic key can be shared.

12. An electronic key managing apparatus which manages electronic key data to receive provision of services, said apparatus comprising:
storing means which stores service allowance information to allow the provision of services and service denial information to deny the provision of services;
accepting means which accepts electronic key data from an external system; and
judging means which judges allowance or denial of the provision of services for said accepted electronic key data on the basis of said accepted electronic key data, said service allowance information, and said service denial information.

13. A door locking/unlocking system which locks or unlocks a door of a residence with the use of an electronic key, said system comprising:
an IC card which has stored electronic key data having a main ID and a sub ID to identify an electronic key, and a device which locks or unlocks the door by judging validity of said electronic key data,
wherein:
said IC card comprises transmittingmeans which accepts an electronic key transmission request from said device and transmits said electronic key data to said device; and
said device comprises
storing means which stores service allowance information to allow the provision of services and service denial information to deny the provision of services,
accepting means which accepts said electronic key data from said IC card,
first judging means which judges whether the main ID in said accepted electronic key data is present in said service allowance information,
second judging means which judges whether the sub ID in said accepted electronic key data is present in said service denial information, and
performing means which locks or unlocks the door by judging the validity of said accepted electronic key data according to results of said first and second judgments.

14. A rental car service system which provides a key of a rental car to a user with the use of an electronic key as the key of the rental car, said system comprising:
an IC card which has stored electronic key data having a main ID and a sub ID to identify the electronic key, a device which allows the use of the rental car by judging validity of said electronic key data, and an electronic key managing apparatus which manages said electronic key data to receive the provision of services,
wherein:
said electronic key managing apparatus comprises generating means which generates an electronic key having a main ID and a sub ID to identify a rental car selected from an external system, transmitting means which transmits said generated electronic key to the IC card of the user, and transmitting means which transmits said main ID to said device;
said IC card comprises storing means which stores said generated electronic key; and
said device comprises storing means which stores said transmitted main ID into service allowance information to allow the provision of services.

15. A program of a computer apparatus used for a service providing device which judges allowance or denial of provision of services to judge allowance or denial of the provision of services, said program causing said computer apparatus to activate:
storing means which stores main ID data and sub ID data to identify an electronic key; and
transmission request accepting means which accepts an electronic key transmission request from said service providing device, and transmitting means which transmits said electronic key data to said service providing device.

16. The program according to Claim 15, further causing said computer apparatus to activate:
storing means which stores shared hierarchy data indicating whether the electronic key can be shared;
sharing request accepting means which accepts an electronic key sharing request;
generating means which generates electronic key data to be shared, having a same main ID and a different sub ID, when the electronic key can be shared; and
transmitting means which transmits said generated electronic key data to be shared to an external system.

17. A program readable by a computer apparatus for judging allowance or denial of provision of services which causes the computer apparatus to judge allowance or denial of the provision of services with the use of electronic key data stored in a user module, said program causing said computer apparatus to activate:
storing means which stores service allowance information to allow the provision of services and service denial information to deny the provision of services;
accepting means which accepts said electronic key data from said user module; and
judging means which judges allowance or denial of the provision of services for said accepted electronic key data on the basis of said accepted electronic key data, said service allowance information, and said service denial information.

18. An electronic key usage method which provides services with the use of an electronic key, said method comprising:
a storing step of storing service allowance information to allow the provision of services and service denial information to deny the provision of services;
an accepting step of accepting electronic key data, containing main ID data and sub ID data to identify an electronic key, from an external system;
a first judging step of judging whether a main ID of said accepted electronic key data is present in said service allowance information;
a second judging step of judging whether a sub ID of said accepted electronic key data is present in said service denial information; and
a provision allowance/denial judging step of judging allowance or denial of the provision of services for said accepted electronic key data according to results of said first and second judging steps.
